# FASCICULE DE BREVET EUROPEEN

(11) **EP 1 663 689 B1**
(45) Date de publication et mention de la délivrance du brevet: **14.01.2009**
(21) Numéro de dépôt: 04816195.4
(22) Date de dépôt: 09.09.2004
(51) Int. Cl.: B60K 13/04

(54) **SUPPORT ELASTIQUE NOTAMMENT POUR LIGNES D ECHAPPEMENT DE VEH ICULE AUTOMOBILE**
ELASTISCHE STÜTZE, INSBESONDERE FÜR ABGASSYSTEME AN KRAFTFAHRZEUGEN
ELASTIC SUPPORT IN PARTICULAR FOR EXHAUST SYSTEMS ON MOTOR VEHICLES

(30) Priorité: 19.09.2003 FR 0311005
(43) Date de publication de la demande: 07.06.2006
(73) Titulaire: Delmon, Pierre, 19100 Brive la Gaillarde (FR)
(72) Inventeur: DELMON, Pierre, F-19100 BRIVE LA GAILLARDE (FR); MAS, Jean, F-33000 Bordeaux (FR)
(74) Mandataire: Schmit, Christian Norbert Marie
(86) Numéro de dépôt international: PCT/FR2004/050421
(87) Numéro de publication internationale: WO 2005/028232

(56) Documents cités:
- EP-A- 0 324 693
- EP-A- 0 531 193
- WO-A-99/48717
- DE-C- 688 758
- PATENT ABSTRACTS OF JAPAN vol. 2000, no. 06, 22 septembre 2000 (2000-09-22) & JP 2000 065138 A (BRIDGESTONE CORP), 3 mars 2000 (2000-03-03)

## Description

La présente invention concerne un support élastique notamment applicable à la suspension et au maintien d'éléments de lignes d'échappement de véhicule automobile.

WO 99/48717 A1 décrit un support élastique selon le préambule de la revendication 1.

Les dispositifs de maintien de lignes d'échappement d'un véhicule doivent autoriser un certain débattement des éléments de ces lignes d'échappement soumis à des vibrations transmises par le moteur du véhicule, à des efforts causés par les mouvements du véhicule et du moteur et à des vibrations intrinsèques à l'échappement des gaz. Pour ce faire, des dispositifs de suspension existent et notamment le document EP 0 411 246 A1 concerne la réalisation d'un support élastique de retenue de silencieux d'échappement de forme générale elliptique comportant deux parties d'extrémité munies de passages parallèles de réception de tiges, l'une solidaire du châssis d'un véhicule, l'autre solidaire d'un élément de la ligne d'échappement, une zone centrale ajourée étant prévue entre les parties d'extrémité et comportant une traverse centrale élastique dans un plan médian entre les deux parties susdites, cette traverse absorbant les forces de torsion et de compression générées par les vibrations auxquelles est soumis l'élément d'échappement à suspendre.

Un autre exemple de dispositif de maintien d'un élément d'une ligne d'échappement est décrit dans le document EP 0 907 853 A1. Selon ce document, un support élastique comprend deux parties d'extrémité, l'une raccordée à la structure d'un véhicule, l'autre à l'élément vibrant, les parties d'extrémité étant dirigées dans des directions opposées et reliées par deux ou trois bras élastiques disposés en diagonales par rapport à la direction des vibrations, ces bras étant agencés de telle sorte que lors de l'application de vibrations tendant à déplacer les parties d'extrémité dans une direction transversale, au moins l'un des bras est soumis à des forces de torsion et compression alors que le ou les autres bras sont soumis à des forces de traction ce qui permet de conserver pour cette direction une raideur importante. Le débattement de ce support à bras diagonaux doit toutefois être limité dans le plan vertical, par exemple à l'aide d'une sangle du fait de la longueur développée des bras.

Ces réalisations permettent une filtration des vibrations dans la gamme 0 à 800Hz communément rencontrée dans l'automobile.

La présente invention a pour but de réaliser un support offrant une forte atténuation des vibrations d'un élément vibrant, et un rapport rigidité selon un axe vertical / rigidité selon un axe transversal adapté aux besoins et permettant notamment d'accroître la rigidité générale du dispositif et de limiter le débattement de l'élément vibrant selon l'axe vertical et selon un premier axe horizontal transversal au véhicule tout en conservant une souplesse et une possibilité de débattement importantes selon un second axe horizontal longitudinal au véhicule.

A cet effet, l'invention a pour objet un support elastique selon la revendication 1.

Suivant un mode de réalisation ladite section tubulaire aplatie définit deux parois en regard sensiblement planes perpendiculaires audit axe vertical, reliées entre elles par deux parois opposées de forme sensiblement semi-cylindrique.

De préférence, lesdites parois sensiblement planes sont reliées respectivement audits moyens de maintien de l'élément de la ligne d'échappement et audits moyens de fixation du véhicule par un pontage de section réduite, lesdits pontages étant disposés en opposition par rapport à l'axe de ladite section tubulaire aplatie.

Un tel dispositif de fixation-suspension élastique offre une rigidité importante et donc un débattement limité à la fois verticalement et transversalement au véhicule ainsi équipé tout en assurant une forte atténuation des vibrations et en offrant un débattement plus important longitudinalement au véhicule, c'est-à-dire dans l'axe général de la ligne d'échappement en sorte d'absorber aisément les variations de longueur de cette ligne dues à son échauffement et à son refroidissement.

D'autres caractéristiques et avantages ressortiront de la description qui va suivre d'un mode de réalisation de l'invention non limitatif en référence aux dessins sur lesquels :
Figure 1 est une vue en perspective du montage d'un élément d'une ligne d'échappement d'un véhicule automobile sur un support élastique selon l'invention.
Figure 2 est une vue en perspective d'un support élastique conforme à l'invention;
Figure 3 représente le support de la figure 2 en vue de face;
Figures 4a et 4b illustrent deux modes de fonctionnement du support de la figure 3;

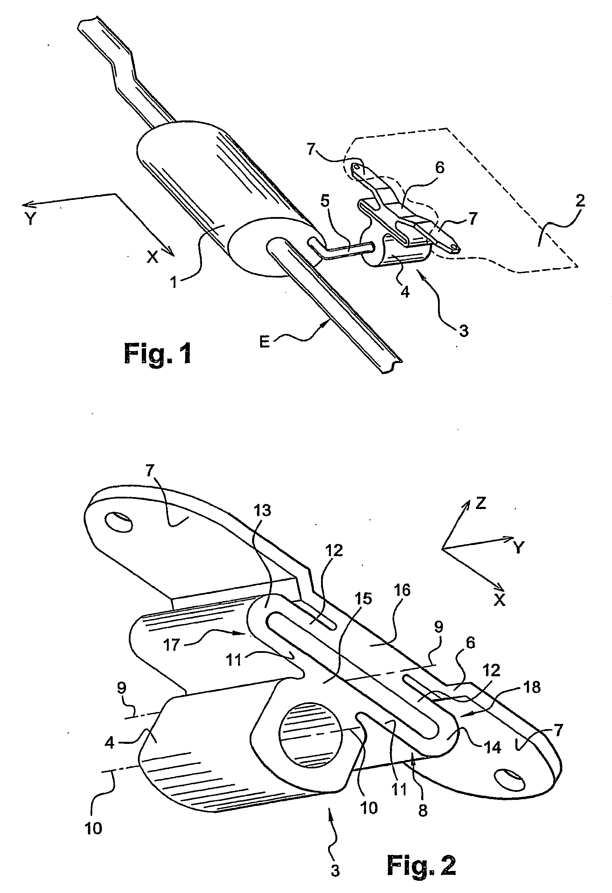

La figure 1 représente schématiquement la fixation d'un élément vibrant 1 tel qu'un pot d'échappement de véhicule automobile à une partie 2 telle que le châssis du véhicule automobile à l'aide d'un support élastique 3 selon l'invention. Plus précisément, la figure 1 illustre le montage d'un support de l'invention en partie arrière de la ligne d'échappement.

Sur les véhicules automobiles modernes il est de plus en plus recherché d'encastrer la ligne d'échappement dans le châssis pour éviter les nuisances sonores et cacher cette ligne d'échappement inesthétique. Les châssis automobiles pour ce faire possèdent des formes en creux ou tunnels dans lesquels se logent les éléments de la ligne d'échappement. Il reste que le soubassement des véhicules est encombré de divers organes ce qui limite la largeur de ces tunnels et peut causer des chocs entre les éléments de la ligne d'échappement et le châssis par exemple dans les virages ou sur les cassis ou tout simplement en cas de vibrations importantes de la ligne d'échappement.

Pour éviter ces chocs, il est nécessaire d'offrir une fixation de la ligne suffisamment rigide dans une direction transversale par rapport au véhicule, ce, tout en conservant un excellent filtrage des vibrations de la ligne d'échappement notamment dans une plage de 0 à 800 Hz. Par ailleurs, la fixation notamment à l'arrière de la ligne doit être suffisamment souple dans le sens longitudinal du véhicule pour encaisser les variations de longueur de la ligne lors de son échauffement ou refroidissement, variations de longueur qui peuvent atteindre couramment une trentaine de millimètres.

Le support 3, représenté plus en détail à la figure 2, comprend, à une première extrémité, des moyens de maintien du pot d'échappement 1 constitués, dans le mode de réalisation représenté, par un manchon 4 de réception d'une tige de fixation 5 du pot 1, solidaire de ce dernier et, à l'autre extrémité, des moyens de fixation du support 3 au véhicule constitués par une platine 6 à oreilles 7 de fixation au châssis 2 du véhicule.

Le manchon 4 et la platine 6 sont, dans le mode de réalisation représenté, reliés par une section intermédiaire tubulaire aplatie 8.

L'ensemble du support 3 est de préférence formé d'un seul bloc d'un matériau élastomère moulé présentant une résistance à la chaleur et un module d'élasticité appropriés. La platine 6 et les oreilles 7 sont en outre pourvues à la manière connue d'un insert métallique de rigidification.

Il est à noter que la platine 6 de fixation peut avoir une autre forme adaptée à l'interface de réception sur le véhicule concerné.

Lorsque le support 3 est en place, la platine 6, la section intermédiaire tubulaire 8 et le manchon 4 sont disposés les uns au dessus des autres suivant un axe vertical Z, cependant que l'axe 9 de la section tubulaire 8 et l'axe 10 du manchon 4 sont sensiblement parallèles et perpendiculaires audit axe Z.

La tige 5 de fixation du pot 1 au support 3 est elle-même sensiblement orthogonale à la direction générale de la ligne d'échappement E, laquelle correspond à l'axe longitudinal, dénommé axe X, du véhicule.

Les axes des parties 8 et 4 s'étendent ainsi suivant une direction Y ou axe transversal du véhicule, orthogonale à la fois à l'axe X et à l'axe Z comme illustré sur la figure 2.

Plus précisément, dans le mode de réalisation représenté la section tubulaire aplatie 8 définit deux parois planes en regard 11 et 12, de même épaisseur, perpendiculaires à l'axe Z et reliées entre elles par deux parois opposées respectivement 13 et 14 de forme sensiblement semi-cylindrique, de même épaisseur que les parois 11, 12.

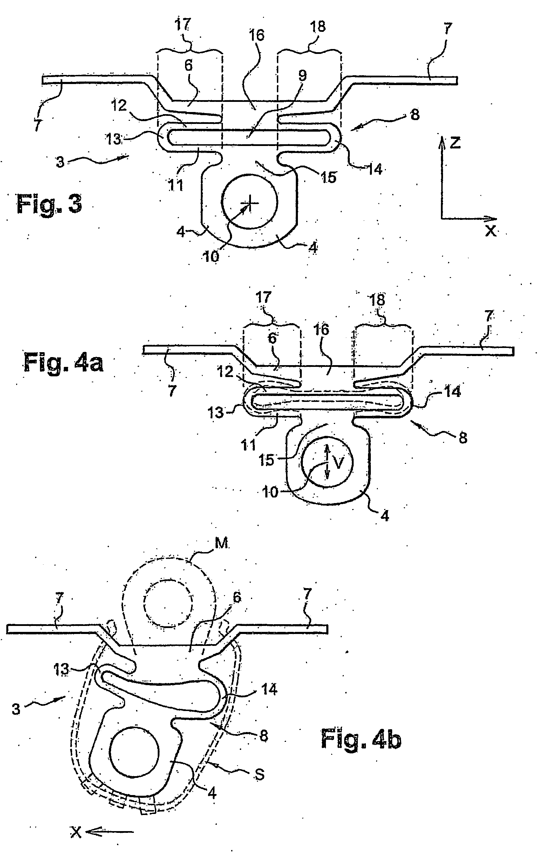

Par ailleurs, la section tubulaire aplatie 8 est reliée au manchon 4 et à la platine 6 par deux pontages de section réduite respectivement 15 et 16, agencés symétriquement par rapport à l'axe 9 de la partie tubulaire 8. Les pontages 15, 16 délimitent ainsi (figure 3) deux parties symétriques en forme de soufflet 17 et 18, constitués des parois arrondies d'extrémité 13, 14 et d'une partie des parois planes en regard 11, 12.

L'agencement de la partie intermédiaire 8 du support de l'invention répond à plusieurs fonctions.

La première est de permettre un amortissement des vibrations dans la direction verticale (axe Z) grâce à l'espace entre les parois 11, 12 en regard et à la flexibilité de ces parois. Une deuxième fonction est de limiter le débattement de la ligne d'échappement E toujours dans la direction verticale. En effet, le support 3 fait office de suspente pour la ligne d'échappement E dont le poids tend à étirer la section tubulaire 8.

La forme de la partie intermédiaire 8 du support ainsi que la nature du matériau constitutif permettant de soutenir élastiquement la ligne d'échappement en lui autorisant un certain débattement vertical, ou déflexion sous charge, limité dans le sens vers le bas à une valeur par exemple de l'ordre de 3mm et dans le sens vers le haut à la distance séparant les parois 11, 12, la valeur de la déflexion pouvant varier selon les paramètres de réglage du dispositif et la nature du matériau utilisé.

Comme il a été dit plus haut une autre fonction importante du support 3 est de s'opposer aux déplacements transversaux (axe Y) de la ligne d'échappement E. Ceci est réalisé principalement par les parties en soufflet 17 qui travaillent en cisaillement et offrent, du fait de la structure tubulaire, une forte résistance aux déplacements de la tige 5 suivant l'axe Y.

Par ailleurs, lesdites parties 17, 18 constituent des ressorts amortis ou batteurs aptes à amortir les vibrations V dans le plan vertical de la ligne d'échappement comme illustré par la figure 4a.

Pour augmenter l'inertie de ces batteurs (17, 18) on peut éventuellement soit prolonger l'une et/ou l'autre des parois planes 11, 12 au delà des sections 13, 14 soit allonger la distance séparant ces deux sections.

La section tubulaire aplatie 8 constitue non seulement une zone élastique d'amortissement des vibrations suivant l'axe vertical Z, mais également un limiteur de débattement suivant l'axe X du fait de l'agencement des soufflets 17, 18 qui travaillent ici en flexion-extension comme illustré par la figure 4b.

Ceci permet d'absorber les éventuelles variations de longueur de la ligne d'échappement E.

La conception du support élastique de l'invention offre une grande latitude d'adaptation sélective de la raideur à la fois dans la direction verticale Z, dans la direction transversale Y, et dans la direction longitudinale X, tout en assurant un amortissement optimal des vibrations transmises par la ligne d'échappement E. Ces adaptations se feront en jouant notamment sur l'épaisseur des parois 11 à 14, sur la longueur de la partie tubulaire aplatie 8, la section des pontages 15, 16, les distances séparant d'une part les parois planes 11, 12, d'autre part les soufflets d'extrémité 13, 14, ainsi que sur la nature du matériau constitutif du support 3.

Dans le mode de réalisation représenté et décrit ci-dessus, la section tubulaire aplatie 8 présente des parois opposées 11, 12 sensiblement planes et perpendiculaires à l'axe Z.

Ladite section tubulaire pourrait avoir une forme légèrement différente, par exemple une forme avec un profil transversal elliptique ou en losange, les parties homologues des parties 11, 12 n'étant plus parallèles mais formant entre elles un angle variable dans le but de régler le rapport des rigidités suivant les axes X, Y, Z ainsi que l'effet batteur.

De même, dans le mode de réalisation décrit, la paroi de la section tubulaire 8 est d'épaisseur constante, mais cette épaisseur pourrait être évolutive et notamment être différente entre les parties 11, 12 au droit des pontages de liaison 15, 16 et les parties en soufflet 13, 14, dans le but, là aussi, de régler le rapport des rigidités suivant les axes X, Y, Z, ainsi que l'effet batteur.

Les pontages 15, 16 sont symétriques ou dissymétriques suivant les applications, toujours dans le même but de réglage des rigidités et de l'effet batteur.

Enfin, le support élastique de l'invention peut être monté à l'avant de la ligne d'échappement E, près du moteur, auquel cas le support est monté avec ses axes 9, 10 parallèles à l'axe longitudinal X du véhicule, permettant ainsi d'encaisser autour de l'axe Z les à-coups du couple moteur transmis à la ligne d'échappement.

Il est à noter que le support 3 pourrait être éventuellement muni comme illustré par la figure 4b et à la manière connue, d'une sangle S de limitation d'extension suivant l'axe Z dudit support.

Enfin, en variante, la platine à oreilles (6, 7) pourrait être remplacée par un manchon comme symbolisé en M sur la figure 4b, analogue au manchon 4, d'axe parallèle à l'axe 9 de la section tubulaire 8 et recevant une tige (non représentée) de fixation du support 3 au véhicule.

## Revendications

1. Support élastique notamment pour ligne d'échappement (E) de véhicule automobile comprenant, à une première extrémité, des moyens (4) de maintien d'un élément de la ligne d'échappement (E) et à une seconde extrémité des moyens (6, 7) de fixation du support au véhicule, lesdits moyens de maintien d'une part et de fixation, d'autre part, étant agencés les uns au dessus des autres suivant un premier axe (Z) dit vertical, **caractérisé en ce que** les moyens (4) de maintien de l'élément (1) de la ligne d'échappement sont reliés aux moyens (6, 7) de fixation au véhicule par une partie intermédiaire de section tubulaire aplatie (8) constituée du même matériau que lesdits moyens de maintien et lesdits moyens de fixation, et dont l'axe (9) est sensiblement orthogonal à l'un des deux axes, respectivement longitudinal (X) et transversal (Y) du véhicule, lesdits moyens (4) de maintien, lesdits moyens (6, 7) de fixation et ladite partie intermédiaire de section tubulaire aplatie (8) étant constitués d'un seul bloc.

2. Support élastique selon la revendication 1 **caractérisé en ce que** ladite partie intermédiaire de section tubulaire aplatie (8) a un profil transversal elliptique ou en losange.

3. Support élastique selon la revendication 1 **caractérisé en ce que** ladite section tubulaire aplatie (8) définit deux parois en regard sensiblement planes (11, 12) perpendiculaires audit axe vertical (Z), reliées entre elles par deux parois opposées (13, 14) de forme sensiblement semi-cylindrique.

4. Support élastique selon la revendication 2 ou 3, **caractérisé en ce que** ladite partie intermédiaire de section tubulaire aplatie présente une épaisseur de paroi évolutive.

5. Support élastique selon la revendication 3 **caractérisé en ce que** lesdites parois sensiblement planes (11, 12) sont reliées respectivement audits moyens (4) de maintien de l'élément (1) de la ligne d'échappement (E) et audits moyens (6, 7) de fixation du véhicule par un pontage (15, 16) de section réduite, lesdits pontages étant disposés en opposition par rapport à l'axe (9) de la partie intermédiaire de section tubulaire aplatie (8).

6. Support élastique selon la revendication 5, **caractérisé en ce que** lesdits pontages (15, 16) sont dissymétriques.

7. Support élastique selon l'une des revendications 3 et 6, **caractérisé en ce que** lesdites parois opposées (13, 14) de forme sensiblement semi-cylindrique ont une épaisseur différente de celle des autres parties (11, 12) de ladite partie intermédiaire de section tubulaire aplatie (8).

8. Support élastique selon l'une des revendications 1 à 7 **caractérisé en ce que** lesdits moyens de maintien d'un élément (1) de la ligne d'échappement (E) sont constitués d'un manchon (4) d'axe (10) parallèle à l'axe (9) de la section tubulaire aplatie (8) et recevant une tige de fixation (5) solidaire dudit élément (1).

9. Support élastique selon le revendication 8, plus particulièrement destiné à être monté à l'arrière de la ligne d'échappement (E), **caractérisé en ce que** l'axe (10) dudit manchon (4) est sensiblement parallèle audit axe transversal (Y) du véhicule.

10. Support élastique selon la revendication 8, plus particulièrement destiné à être monté à l'avant de la ligne d'échappement (E), **caractérisé en ce que** l'axe (10) dudit manchon (4) est sensiblement parallèle audit axe longitudinal (X) du véhicule.

11. Support élastique suivant l'une des revendications 1 à 10 **caractérisé en ce que** lesdits moyens de fixation du support (3) au véhicule sont constitués d'un manchon (M) d'axe parallèle à l'axe (9) de ladite partie intermédiaire de section tubulaire aplatie (8).

12. Support élastique suivant l'une des revendications 1 à 11, **caractérisé en ce que** lesdits moyens (4) de maintien d'un élément (1) de la ligne d'échappement (E), lesdits moyens (6, 7) de fixation du support (3) au véhicule et ladite partie intermédiaire de section tubulaire aplatie (8) sont constitués d'un seul bloc d'un matériau élastomère moulé.

## Claims

1. An elastic support, in particular for a motor vehicle exhaust system (E), comprising, at a first end, means (4) of holding a component of the exhaust system (E) and at a second end a means (6, 7) of fixing the support to the vehicle, said means of on the one hand holding and on the other hand fixing being arranged one above the other along a first so-called vertical axis (Z), **characterised in that** the means (4) of holding the component (1) of the exhaust system is connected to the means (6, 7) of fixing to the vehicle by an intermediate part with a flattened tubular section (8) formed from the same material as said holding means and said fixing means, and the axis (9) of which is substantially orthogonal to one of the two axes, respectively longitudinal (X) and transverse (Y), of the vehicle, said holding means (4), said fixing means (6, 7) and said intermediate part with a flattened tubular section (8) being formed from a single block.

2. An elastic support according to claim 1, **characterised in that** said intermediate part with a flattened tubular section (8) has an elliptical or diamond-shaped transverse profile.

3. An elastic support according to claim 1, **characterised in that** said flattened tubular section (8) defines two substantially planar facing walls (11, 12) perpendicular to said vertical axis (Z), connected together by two opposed walls (13, 14) with a substantially semicylindrical shape.

4. An elastic support according to claim 2 or 3, **characterised in that** said intermediate part with a flattened tubular section has a changing wall thickness.

5. An elastic support according to claim 3, **characterised in that** said substantially planar walls (11, 12) are connected respectively to said means (4) of holding the component (1) of the exhaust system (E) and to said means (6, 7) of fixing the vehicle by a bridge (15, 16) of reduced cross section, said bridges being disposed in opposition with respect to the axis (9) of the intermediate part with a flattened tubular section (8).

6. An elastic support according to claim 5, **characterised in that** said bridges (15, 16) are asymmetric.

7. An elastic support according to one of claims 3 and 6, **characterised in that** said opposed walls (13, 14) with a substantially semicylindrical shape have a thickness different from that of the other parts (11, 12) of said intermediate part with a flattened tubular section (8).

8. An elastic support according to one of claims 1 to 7, **characterised in that** said means of holding a component (1) of the exhaust system (E) comprises a sleeve (4) with an axis (10) parallel to the axis (9) of the flattened tubular section (8) and receiving a fixing rod (5) secured to said component (1).

9. An elastic support according to claim 8, more particularly intended to be mounted at the rear of the exhaust system (E), **characterised in that** the axis (10) of said sleeve (4) is substantially parallel to said transverse axis (Y) of the vehicle.

10. An elastic support according to claim 8, more particularly intended to be mounted at the front of the exhaust system (E), **characterised in that** the axis (10) of said sleeve (4) is substantially parallel to said longitudinal axis (X) of the vehicle.

11. An elastic support according to one of claims 1 to 10, **characterised in that** said means of fixing the support (3) to the vehicle comprises a sleeve (M) with an axis parallel to the axis (9) of said intermediate part with a flattened tubular section (8).

12. An elastic support according to one of claims 1 to 11, **characterised in that** said means (4) of holding a component (1) of the exhaust system (E), said means (6, 7) of fixing the support (3) to the vehicle and said intermediate part with a flattened tubular section (8) are formed from a single block of a moulded elastomer material.

## Patentansprüche

1. Elastischer Halter, insbesondere für die Auspuffanlage (E) eines Kraftfahrzeugs, der an einem ersten Ende Haltemittel (4) für ein Element der Auspuffanlage (E) und an einem zweiten Ende Befestigungsmittel (6, 7) zur Befestigung des Halters am Fahrzeug aufweist, wobei die Haltemittel einerseits und die Befestigungsmittel andererseits übereinander entlang einer ersten Achse (Z) angeordnet sind, die vertikal genannt wird, **dadurch gekennzeichnet, dass** die Haltemittel (4) für das Element (1) der Auspuffanlage mit den Befestigungsmitteln (6, 7) zur Befestigung am Fahrzeug durch ein Zwischenstück (8) von rohrförmigem, abgeflachtem Querschnitt verbunden sind, das aus demselben Material wie die Haltemittel und die Befestigungsmittel besteht, und dessen Achse (9) im Wesentlichen orthogonal zur longitudinalen (X) oder transversalen (Y) Achse des Fahrzeugs ist, und wobei die Haltemittel (4), die Befestigungsmittel (6, 7) und das Zwischenstück von rohrförmigem, abgeflachtem Querschnitt (8) aus einem einzigen Block bestehen.

2. Elastischer Halter nach Anspruch 1, **dadurch gekennzeichnet, dass** das Zwischenstück von rohrförmigem, abgeflachtem Querschnitt (8) einen elliptischen oder rautenförmigen Querschnitt aufweist.

3. Elastischer Halter nach Anspruch 1, **dadurch gekennzeichnet, dass** das Zwischenstück von rohrförmigem abgeflachen Querschnitt (8) zwei gegenüberliegende im wesentlichen ebene Wände (11,12) senkrecht zur vertikalen Achse (Z) definiert, die untereinander verbunden sind durch zwei gegenüberliegende Wände (13, 14) von im Wesentlichen halbzylindrischer Form.

4. Elastischer Halter nach Anspruch 2 oder 3, **dadurch gekennzeichnet, dass** das Zwischenstück von rohrförmigem, abgeflachtem Querschnitt eine verärtderliche Wandstärke aufweist.

5. Elastischer Halter nach Anspruch 3, **dadurch gekennzeichnet, dass** die im Wesentlichen ebenen Wände (11, 12) jeweils mit den Haltemitteln (4) des Elements (1) der Auspuffanlage (E) und den Befestigungsmitteln (6, 7) am Fahrzeug durch Brücken (15, 16) mit verringertem Querschnitt verbunden sind, die gegenüberliegend in Bezug auf die Achse (9) des Zwischenstücks mit rohrförmige, abgeflachtem Querschnitt angeordnet sind.

6. Elastischer Halter nach Anspruch 5, **dadurch gekennzeichnet, dass** die Brücken (15, 16) asymmetrisch sind.

7. Elastischer Halter nach einem der Ansprüche 3 und 6, **dadurch gekennzeichnet, dass** die gegenüberliegenden Wände (13, 14) von im Wesentlichen halbzylindrischer Form eine andere Wandstärke als die anderen Abschnitte (11, 12) des genannten rohrförmigen abgeflachen Zwischenstücks (8) aufweisen.

8. Elastischer Halter nach einem der Ansprüche 1 bis 7, **dadurch gekennzeichnet, dass** die Haltemittel eines Elements (1) der Auspuffanlage (E) aus einer Muffe (4) mit einer Achse (10) parallel zur Achse (9) des rohrförmigen abgeflachten Teils bestehen und einen mit dem Element (1) verbundenen Befestigungsbolzen (5) aufnehmen können.

9. Elastischer Halter nach Anspruch 8, insbesondere dazu vorgesehen, im hinteren Bereich der Auspuffanlage (E) montiert zu werden, **dadurch gekennzeichnet, dass** die Achse (10) der Muffe (4) im Wesentlichen parallel zur Querachse (Y) des Fahrzeugs ist.

10. Elastischer Halter nach Anspruch 8, insbesondere dazu vorgesehen, im vorderen Bereich der Auspuffanlage (E) montiert zu werden, **dadurch gekennzeichnet, dass** die Achse (10) der Muffe (4) im Wesentlichen parallel zur Längsachse (Y) des Fahrzeugs ist.

11. Elastischer Halter nach einem der Ansprüche 1 bis 10, **dadurch gekennzeichnet, dass** die Befestigungsmittel des Halters (3) am Fahrzeug aus einer Muffe (M) bestehen, deren Achse parallel zur Achse (9) des Zwischenstücks von rohrförmigem, abgeflachtem Querschnitt (8) ist.

12. Elastischer Halter nach einem der Ansprüche 1 bis 11, **dadurch gekennzeichnet, dass** die Haltemittel (4) eines Elements (1) der Auspuffanlage (E), die Befestigungsmittel (6,7) des Halters (3) am Fahrzeug und das Zwischenstück von rohrförmigem abgeflachtem Querschnitt (8) aus einem einzigen Block eines geformten elastomeren Gußmaterials bestehen.
